# EUROPÄISCHE PATENTSCHRIFT

(11) **EP 1 039 110 B1**
(45) Veröffentlichungstag und Bekanntmachung des Hinweises auf die Patenterteilung: **06.10.2004**
(21) Anmeldenummer: 00104292.8
(22) Anmeldetag: 01.03.2000
(51) Int. Cl.: F02B 3/06, F02F 1/42, F02B 31/00

(54) **Gegossener Zylinderkopf mit Steuergehäuse für eine mehrzylindrige, flüssigkeitsgekühlte Brennkraftmaschine, insbesondere Dieselmotor**
Cast cylinder head with a valve drive housing for a multi cylinder liquid cooled internal combustion engine, particularly a diesel engine
Culasse moulé avec batiment d'entrainement des soupapes pour un moteur Diesel à multi-cylindres, refroidi par liquide

(30) Priorität: 23.03.1999 DE 19912948
(43) Veröffentlichungstag der Anmeldung: 27.09.2000
(73) Patentinhaber: Bayerische Motoren Werke Aktiengesellschaft, 80809 München (DE)
(72) Erfinder: Blumenschein, Siegfried, 4431 Haidershofen (AT)

(56) Entgegenhaltungen:
- EP-A- 0 527 122

## Beschreibung

Die europäische Patentschrift EP 0527 122 B1 zeigt und beschreibt für einen Dieselmotor einen Zylinderkopf mit zwei drallerzeugenden Einlaßkanälen, wobei ein erster Einlaßkanal eine Längsseitenwand des Zylinderkopfes durchsetzend angeordnet ist und ein zweiter Einlaßkanal im Anschluß an einen nahe dem Zylinderkopfboden verlaufend angeordneten Drallabschnitt zumindest abschnittsweise in etwa parallel zu einer Zylinderachse das im Zylinderkopf integrierte Steuergehäuse vertikal durchsetzend angeordnet ist.

Bei der Umsetzung dieses Anordnungs-Konzeptes der Einlaßkanäle bietet es sich insbesondere an, den einen Bereich eines Zylinders abdeckenden Zylinderkopfboden in Nachbarschaft des Drallabschnittes des zwischen benachbarten Zylindern vertikal verlaufenden Einlaßkanals über einen Steg an diesem Drallabschnitt abzustützen. Da der den benachbarten Zylinder überdeckende anschließende Abschnitt des Zylinderkopfbodens ohne diese Stegabstützung ist, unterliegt dieser Steg sich überlagernden Druck- und Zugspannungen aus aufeinanderfolgenden Zündungen der benachbarten Zylinder mit der möglichen Folge von Materialrissen im Stegbereich.

Der Erfindung liegt die Aufgabe zugrunde, einen Zylinderkopf mit zwei drallerzeugenden Einlaßkanälen gußtechnisch so auszulegen, daß keine Materialrisse im Stegbereich des Zylinderkopfbodens auftreten.

Diese Aufgabe ist mit dem Patentanspruch gelöst. Hiernach bezieht sich der Vorschlag auf einen gegossenen Zylinderkopf mit Steuergehäuse für eine mehrzylindrige, flüssigkeitsgekühlte Brennkraftmaschine, insbesondere Dieselmotor, umfassend je Zylinder zwei in einer zur Motorlängsebene parallelen Ebene angeordnete Einlaßventile zur Steuerung zweier gesonderter, drallerzeugender Einlaßkanäle, wobei ein erster Einlaßkanal eine Längsseitenwand des Zylinderkopfes durchsetzend angeordnet ist und ein zweiter Einlaßkanal im Anschluß an einen nahe dem Zylinderkopfboden verlaufend angeordneten Drallabschnitt zur Motorlängsebene im wesentlichen gemittelt und etwa parallel zu einer Zylinderachse das Steuergehäuse vertikal durchsetzt, daß ferner der Drallabschnitt mit dem Zylinderkopfboden über einen Steg verbunden ist, wobei der mit einem zylindermittig angeordnet benachbarten Dom einstückig verbundene vertikale Einlaßkanal zwischen beidseitig angeordneten Schraubenpfeifen der Zylinderkopfverschraubung unverbunden bis zu einer einen Kühlmittelraum vom Steuergehäuse trennenden Deckwand angeordnet ist.

Mit der vorteilhaft einfachen Freistellung des vertikalen Einlaßkanales von den benachbarten Schraubenpfeifen bis hinab zur Deckwand des Zylinderkopf-Kühlmittelraumes ist insgesamt eine die Rißbildung im Steg zwischen Zylinderkopfboden und Drallabschnitt unterbindende Elastizität des Zylinderkopfes erzielt.

Die Erfindung ist anhand eines in der Zeichnung dargestellten Zylinderkopfes beschrieben. Es zeigt
- Figur 1: einen Zylinderkopf im Querschnitt gemäß der Linie I-I in Figur 2, wobei
- Figur 2: ausschnittsweise eine Draufsicht auf den Zylinderkopf widergibt.

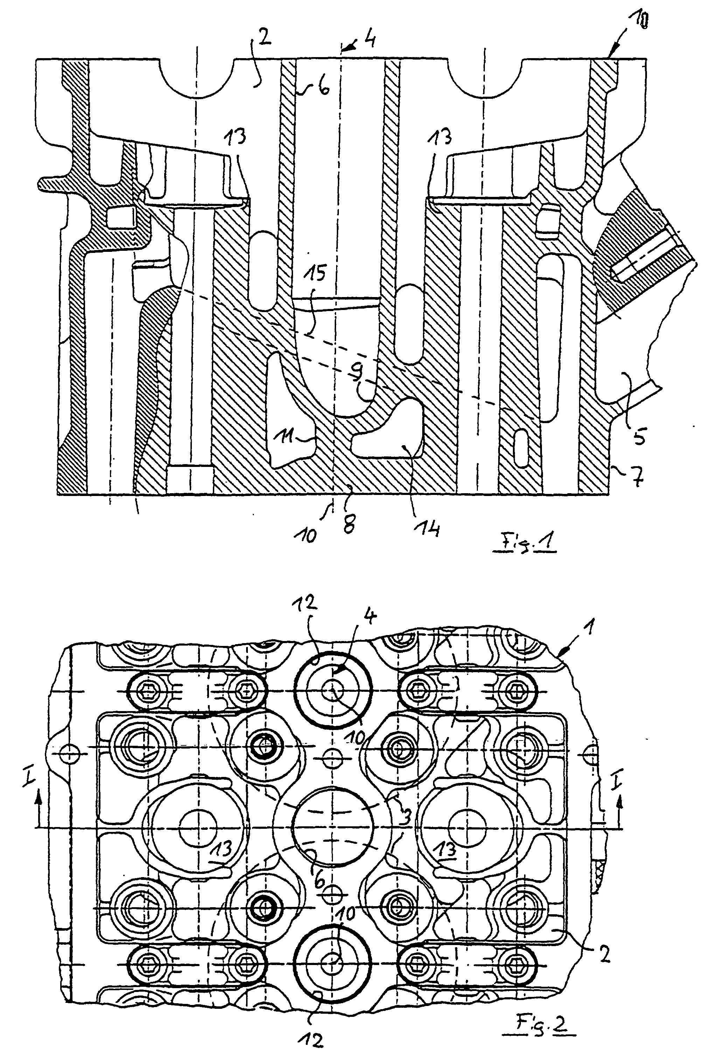

Für eine mehrzylindrige, flüssigkeitsgekühlte und nicht dargestellte Brennkraftmaschine, insbesondere Dieselmotor, ist ein gegossener Zylinderkopf 1 mit einem Steuergehäuse 2 vorgesehen, der je Zylinder 3 zwei in einer zur Motorlängsebene parallelen Ebene angeordnete, nicht gezeigte Einlaßventile zur Steuerung zweier gesonderter, drallerzeugender Einlaßkanäle 5 und 6 umfaßt. Der erste Einlaßkanal 5 ist eine Längsseitenwand 7 des Zylinderkopfes 1 durchsetzend angeordnet. Der zweite Einlaßkanal 6 durchsetzt im Anschluß an einen nahe dem Zylinderkopfboden 8 verlaufend angeordneten Drallabschnitt 9 zur Motorlängsebene 4 im wesentlichen gemittelt und etwa parallel zu einer Zylinderachse 10 das Steuergehäuse 2 vertikal. Wie aus Figur 1 ersichtlich, ist der Drallabschnitt 9 des vertikalen Einlaßkanales 6 mit dem Zylinderkopfboden 8 über einen Steg 11 verbunden.

Um die einstückige Verbindung von Drallabschnitt 9, Steg 11 und Zylinderkopfboden 8 auch bei höchsten Belastungen und hohen Temperaturen elastisch nachgiebig zu gestalten, ist der mit etwa zylindermittig angeordneten, benachbarten Domen 12 für Einspritzdüsen einstückig verbundene vertikale Einlaßkanal 6 zwischen beidseitig angeordneten, der Zylinderkopfverschraubung dienenden Schraubenpfeifen 13 unverbunden angeordnet bzw. freigestellt, wobei die Freistellung des vertikalen Einlaßkanales 6 bis zu einer einen Kühlmittelraum 14 vom Steuergehäuse 2 trennenden Deckwand 15 reicht. Mit dieser gegenüber den Schraubenpfeifen 13 freigestellten Anordnung des Einlaßkanales 6 ist eine Rißbildung im Bereich des Steges 11 bzw. des Drallabschnittes 9 sicher vermieden.

## Patentansprüche

1. Gegossener Zylinderkopf mit Steuergehäuse für eine mehrzylindrige, flüssigkeitsgekühlte Brennkraftmaschine, insbesondere Dieselmotor,
- umfassend je Zylinder (3) zwei in einer zur Motorlängsebene (4) parallelen Ebene angeordnete Einlaßventile zur Steuerung zweier gesonderter, drallerzeugender Einlaßkanäle (5, 6), wobei
- ein erster Einlaßkanal (5) eine Längsseitenwand (7) des Zylinderkopfes (1) durchsetzend angeordnet ist und
- ein zweiter Einlaßkanal (6) im Anschluß an einen nahe dem Zylinderkopfboden (8) verlaufend angeordneten Drallabschnitt (9) zur Motorlängsebene (4) im wesentlichen gemittelt und etwa parallel zu einer Zylinderachse (10) das Steuergehäuse (2) vertikal durchsetzt, daß ferner
- der Drallabschnitt (9) mit dem Zylinderkopfboden (8) über einen Steg (11) verbunden ist, wobei der
- mit einem etwa zylindermittig angeordnet benachbarten Dom (12) einstückig verbundene vertikale Einlaßkanal (6) zwischen beidseitig angeordneten Schraubenpfeifen (13) der Zylinderkopfverschraubung unverbunden bis zu einer einen Kühlmittelraum (14) vom Steuergehäuse (2) trennenden Deckwand (15) angeordnet ist.

## Claims

1. A cast cylinder head with a control casing for a multi-cylinder liquid-cooled internal combustion engine, especially a diesel engine,
- comprising two intake valves per cylinder (3), disposed in a plane parallel with the longitudinal plane (4) of the engine, for controlling two separate swirl-generating intake ports (5, 6), wherein
- a first intake port (5) extends through a longitudinal side wall (7) of the cylinder head (1) and
- a second intake port (6) adjoining a swirl portion (9) near the cylinder-head base (8) extends vertically through the control casing (2), substantially centred in the longitudinal plane (4) of the engine and approximately parallel with a cylinder axis (10), and
- the swirl portion (9) is connected to the cylinder head base (8) by a web (11), wherein
- the approximately vertical intake port (6), integrally connected to a neighbouring dome (12) disposed approximately in the centre of the cylinder, is disposed without connection between two cylinder-head screw holes (13) on each side down to a body panel (15) separating a coolant chamber (14) from the control casing (2).

## Revendications

1. Culasse coulée comportant un boîtier de commande pour un moteur à combustion interne à plusieurs cylindres et refroidi par liquide, en particulier pour un moteur Diesel, qui comprend pour chaque cylindre (3)
- deux soupapes d'admission disposées dans un plan parallèle au plan longitudinal du moteur (4) et destinées à commander deux canaux d'admission (5, 6) séparés qui produisent une torsion,
- un premier canal d'admission (5) étant disposé de façon à traverser une paroi de grand côté (7) de la culasse (1) et
- un deuxième canal d'admission (6) à la suite d'un segment de torsion (9) qui s'étend près du fond de culasse (8) traversant le boîtier de commande (2) à peu près au milieu du plan longitudinal du moteur (4) et presque parallèlement à un axe de culasse (10),
- en outre le segment de torsion (9) est relié au fond de culasse (8) par l'intermédiaire d'une nervure (11),
- le canal d'admission (6) vertical, relié en une seule pièce à un dôme (12) voisin disposé à peu près au centre du cylindre, étant placé sans liaison entre des trous de vis (13) - du vissage de culasse - disposés de chaque côté, jusqu'à une paroi de recouvrement (15) qui sépare du boîtier de commande (2) une chambre à agent refroidissant (14).
